# NEW EUROPEAN PATENT SPECIFICATION

(11) **EP 3 161 954 B2**
(45) Date of publication and mention of the opposition decision: **18.01.2023**
(45) Mention of the grant of the patent: 15.07.2020
(21) Application number: 14752633.9
(22) Date of filing: 19.08.2014
(51) Int. Cl.: H02M 7/00

(54) **POWER CONVERTER AND ASSEMBLY METHOD FOR ASSEMBLING A POWER CONVERTER**
STROMWANDLER UND MONTAGEVERFAHREN ZUR MONTAGE EINES STROMWANDLERS
CONVERTISSEUR D'ÉNERGIE ET PROCÉDÉ D'ASSEMBLAGE POUR ASSEMBLER UN CONVERTISSEUR D'ÉNERGIE

(43) Date of publication of application: 03.05.2017
(73) Proprietor: Huawei Digital Power Technologies Co., Ltd., Shenzhen, 518043 (CN)
(72) Inventor: SCHREIBER, Dejan, 80992 Munich (DE); CHEN, Yi, 80992 Munich (DE); LIANG, Ying, 80992 Munich (DE)
(74) Representative: Grünecker Patent- und Rechtsanwälte PartG mbB
(86) International application number: PCT/EP2014/067613
(87) International publication number: WO 2016/026514

(56) References cited:
- EP-A2- 1 920 528
- DE-A1- 10 153 748
- DE-A1-102005 060 354
- Infineon Technologies AG. "Dokumentation und Betriebsanleitung PrimeSTACK. Rev. 2.3
- Pluschke, Norbert, "Concepts and solutions to parallel Windmill converter up to 6 MW
- Thomas Stockmeier ; Thomas Grasshoff: "Integrated power electronic solutions for renewable energy utilization", Energytech, 2012 IEEE, IEEE, 29 May 2012 (2012-05-29), pages 1-5, DOI: 10.1109/EnergyTech.2012.6304649 ISBN: 978-1-4673-1836-5

## Description

### TECHNICAL FIELD

The present invention relates to a power converter and an assembly method for assembling a power converter. In particular, the present invention relates to a power converter and an assembly method for a power converter having a modular design.

### BACKGROUND

Power converters are used in many applications. For example, power converters are used in an inverter for changing a direct current (DC) into an alternating current (AC), in a rectifier changing an alternating current into a direct current, in a DC/DC converter for changing the voltage of a direct current, or in a converter changing the voltage and/or the frequency of an alternating current.

US 7 667 952 B2 discloses a connection system banks of capacitors associated with an inverter, whereof the capacitors are connected by a busbar consisting of two thin bars of different polarities stacked and separated by an insulating layer.

Power converters are used, for instance, in uninterruptible power supplies (UPS). In such an application an alternating current of an external power supply is rectified for charging a battery. When the external power supply is interrupted, the direct current of the battery is rectified in order to maintain an internal power supply.

Further to this, power converters are also used in connection with the generation of renewable energy. For example, a wind generator or a photovoltaic panel usually generates a direct current. Thus, the energy has to be converted to an alternating current for feeding the energy into the public grid.

Additionally, power converters are also used in many other fields, for instance for motor drives, active front ends (AFE), grid tight inverters (GTI) and many other applications.

For all these applications, the power converters include power modules. These power modules comprise insulated gate bipolar transistor (IGBT) and/or diode chips. Depending on the power range and depending on the desired application, an appropriate power module has to be selected.

The power range of the above described applications usually varies in a very wide range starting form 50 kVA up to 2 MVA and more. Thus, many specialized power modules for the respective application and the desired power range of each power converter are necessary. Accordingly, for each of the many power modules an individual power converter has to be designed. By using a large number of different power modules, the design of all these specialized power modules leads to relative high costs per item for each individual power module.

Further to this, each of the many different power modules requires an individual control circuit. Accordingly, the individual design of the power converters for all power modules and the used power modules require a huge engineering effort, too.

Power converters usually are designed for a specialized power range and the power converter use specialized power modules and specialized control circuits, both adapted to a particular application and a predetermined power range. Thus, it is impossible to change the power range of a power converter afterwards. When the power range of an application changes, a complete new power converter is required having new power modules and a new control circuit.

Furthermore, power converters usually have a high thermal power loss leading to a heating of the respective components. In order to avoid damage due to a high temperature of the power converters, the components of the power converter, in particular the IGBT and the diode chips have to be cooled. For this purpose a forced cooling, for instance a liquid cooling system or an air cooling system, is required. Such a cooling system usually requires large volumes, leading to power converters having a big size.

WO 2007/027890 A2 discloses a power cell system that includes a structure that provides multiple power cell locations.

DE 10 2005 060 354 A1 discloses a modular converter based on a basic converter device and at least one additional converter device. These devices are laterally pluggable with each other through their network and load busbars and by a communication line.

### SUMMARY

Thus, there is a need for a power converter which can be easily adapted to a power range, and wherein the power range can be adapted ex post.

There is also a need for a power converter which can be adapted for a use in different applications.

There is also a need to a power converter which can be manufactured based by a small number of standard power modules.

Further, there is a need for a power converter providing an efficient cooling and having a relative small size.

According to a first aspect of the present invention power converter with a plurality of modular power stack units is provided, each modular power stack unit comprising a plurality of power modules, wherein one or more power modules are arranged on a first side of the modular power stack unit and one or more power modules are arranged on a second side of the modular power stack unit, wherein the second side is opposite of the first side, each power module being connected with a separate driver unit, a capacitor, a connection means for connecting the power modules and the capacitor, wherein the capacitor is arranged between the one or more power modules arranged on the first side and the one or more power modules arranged on the second side, an electrical interface, wherein each electrical interface of the plurality of modular power stack units has a same structure, wherein the separate driver units of each power module are adapted to provide an IGBT-driving signal to the connected power module, respectively, wherein each power module comprises a power diode and/or an insulated gate bipolar transistor, IGBT.

According to a second aspect of the present invention, an assembly method for a modular power stack unit is provided, the method comprising the steps of providing a plurality of modular power stack units, each modular power stack unit comprising a plurality of power modules, wherein one or more power modules are arranged on a first side of the modular power stack unit and one or more power modules are arranged on a second side of the modular power stack unit, wherein the second side is opposite of the first side, each power module being connected to a separated driver unit, a capacitor, a connection means for connecting the power modules and the capacitor, wherein the capacitor is arranged between the one or more power modules arranged on the first side and the one or more power modules arranged on the second side, and an electrical interface, wherein each electrical interface of the plurality of modular power stack units has a same structure, wherein the separate driver units of each power module are adapted to provide an IGBT-driving signal to the connected power module, respectively, wherein each power module comprises a power diode and/or an insulated gate bipolar transistor, IGBT; and connecting the plurality of modular power stack units via the electrical interfaces.

One idea underlying the present invention is to separate a power converter into a plurality of modular power stack modules. Each of these modular power stack units is built on standardized components, in particular based on commonly available standardized power modules. In order to adapt the power range of the power converter to desired power, a plurality of modular power stack units are combined. By providing the same electrical interfaces for all modular power stack units, a plurality of modular power stack units can be easily combined.

In this way, the power can be build based on standardized power modules. Thus, the respective components are good available and less expensive. Thus, the costs for manufacturing such a power converter can be reduced.

By dividing the whole power converter into a plurality of sub-modules, a flexible adjustment of the power range can be achieved. The power range of such a power converter can be easily increased or decreased by simply adding or removing one or more modules.

Additionally, the reliability of the power converter can also be increased. Even when one module is damaged, only the damaged module has to be replaced. The remaining modules can be further used without any modifications.

By separating a power converter into individual modules, an enhanced thermal management can be achieved. In this way, an efficient cooling of the power converter is provided. Consequently, the size of such a power converter can be reduced.

According a first implementation form of a power converter of the second implementation form of the first aspect of the invention, all power modules are the same. By using a plurality of common power modules, in particular standardized power modules, such modules usually are inexpensive and good available.

According a second implementation form of a power converter of the first aspect of the invention as such or according to any of the preceding implementation forms of the first aspect, the modular power stack unit further comprises cooling means.

According a third implementation form of a power converter of the fourth implementation form of the first aspect of the invention, the cooling means comprises a forced air cooling system or a liquid cooling system. By applying separate cooling units to each power stack unit, a good and reliable cooling can be achieved and the efficiency of the modular power stack unit is increased.

According a fourth implementation form of a power converter of the first aspect of the invention as such or according to any of the preceding implementation forms of the first aspect, each of the plurality of modular power stack units comprises a mechanical interface, wherein each mechanical interface of the plurality of modular power stack units is the same. In this way an easy and flexible assembling of the power converter is achieved.

According a fifth implementation form of a power converter of the first aspect of the invention as such or according to any of the preceding implementation forms of the first aspect, the connection means comprises a bus bar. A bus bar for connecting the power modules and the capacitors provides a connection with low inductivity.

According an sixth implementation form of a power converter of the first aspect of the invention as such or according to any of the preceding implementation forms of the first aspect, at least one of the pluralities of modular power stack units is a rectifier, an inverter, a DC/DC converter or an AC/DC/AC converter. Based on such modular power stack units, a very flexible power converter can be created based on the combination of the individual power stack units.

According a seventh implementation form of a power converter of the first aspect of the invention as such or according to any of the preceding implementation forms of the first aspect, the power converter further comprises a mounting device for receiving the plurality of modular power stack units. A mounting device, for instance a rack, provides an efficient and flexible way for mounting and connecting the individual modular power stack units.

According a eigth implementation form of a power converter of the fourth implementation form of the ninth aspect of the invention, the mounting device further comprises pluggable connectors for connecting the electrical interface of the modular power stack units. By means of pluggable connectors, a very easy mounting and demounting of the individual modules can be achieved.

According to a first implementation form of a method of the second aspect of the invention, the method for assembling a power converter determines the number of modular power stack units based on a designed power range of the power converter. By adapting the number of required modules to the desired power range, an individual power converter for a very wide power range can be achieved.

According to third aspect of the invention, an uninterruptible power supply comprising a power converter according to the first aspect of the invention as such or according to any of the preceding implementation forms of the first aspect is provided.

According to fourth aspect of the invention, a solar inverter or a wind energy inverter comprising a power converter according to the first aspect of the invention as such or according to any of the preceding implementation forms of the first aspect is provided.

### BRIEF DESCRIPTION OF DRAWINGS

In the following, the present invention is described with respect to the accompanying figures, wherein:
Fig. 1 is a schematically top view of a power converter according to an embodiment of the present invention;
Fig. 2 is a schematically rear view of a power stack unit according to an embodiment of the invention;
Fig. 3 is a circuit diagram of a power stack module according to an embodiment of the invention;
Fig. 4 is a schematically illustration of a power converter according to an embodiment of the invention; and
Fig. 5 is a flow diagram of an assembling method for a power converter according to an embodiment of the present invention.

In the following, terms for describing a direction like "above", "below", "left", "right" and so on are only for a better understanding of the figures and do not limit the present invention. Same reference numerals relates to same or similar components. The dimensions of the figures are only for illustrated purposes and also do not limit the invention.

### DESCRIPTION OF EMBODIMENTS

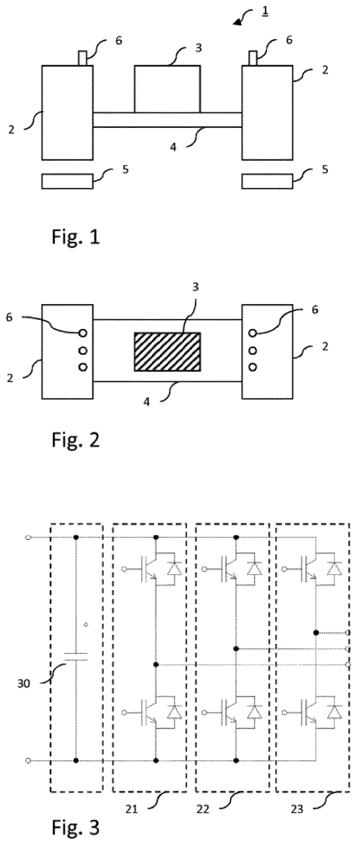

Figure 1 illustrates an example of a modular power stack unit 1. According to this example, one or more power units 2 are arranged in the left and/or the right of the power stack unit 1. Other arrangements of power units 2 in the modular power stack unit 1 are possible, too.

The power modules 2 can be, for instance modules comprising power diodes or IGBT modules.

A plurality of power modules 2 can be arranged in the modular power stack unit 1. For example the power modules can be arranged in the left as well as in the right. For instance, three IGBT modules can be arranged on the left and three further modules can be arranged on the right, respectively. In this way, it is possible to build two three phase inverters, one in the left and one in the right. However, other arrangements of power modules 2 are also possible.

Each power module 2 comprises a separate driver unit for driving the respective power module 2. In particular, each driving unit provides an IGBT-driving signal for driving the respective power module 2. For this purpose, the IGBT-driving signal is galvanically insulated with respect to the supply voltage of the power stack unit 1. In particular, the driver unit may be provided with an additional auxiliary supply voltage. In order to drive the IGBT modules, the driver unit may comprise an output stage for gate voltage control, for protecting the voltage drop between Collector and Emitter VCE(sat) of the IGB and/or for interlock protection features.

In front of the power modules 2, cooling means 5 are arranged for cooling the power modules 2. The cooling means 5 can be a liquid cooling system or a forced air cooling. For example, a forced air cooling system may comprise a plurality of fans. Alternative cooling systems are also possible.

By arranging the cooling system 5 close to the power modules 2, a very efficient cooling of the power modules 2 is achieved. Accordingly, such an efficient cooling leads to lower operation temperatures of the power modules 2. Thus, the efficiency of the modular power stack unit 1, in particular the efficiency of the power modules 2 is increased.

Thus, the cooling efficiency can be significantly improved. The power modules can be arranged in an optimized manner with respect to the cooling requirements. Accordingly, only less and/or smaller components for a forced cooling are necessary. In comparison with conventional power converting systems, for a power converter according to present invention only half volume is needed.

In this way, the overall size of the power converter can be reduced. Thus, the weight of a power converter according to the present invention is significantly reduced, too. Accordingly, the costs for manufacturing such a power converter can be reduced.

In the middle of the modular power stack unit 1, one or more capacitors 3 are arranged between the left and the right power modules 2. The capacitors 3 and the power modules 2 are connected by a connection means 4. In order to achieve a very efficient connection, for instance, a bus bar can be used for connecting capacitors 3 and power module 2. A bus bar is a flat rectangular element having a good electric conductivity. Such a connection of power module 2 and capacitors 3 provides an excellent connection with a low parasitic inductance. Accordingly, due to the low inductance of the connection between capacitor 3 and power module 2 a very good switching behaviour of the power modules 2 can be achieved.

To provide electrical connections, the modular power stack unit 1 further comprises an electrical interface 6. The electrical interface 6 comprises a plurality of terminals for connecting the power stack unit 1 with further modular power stack units 1 or for connecting the modular power stack unit 1 with further external components.

In order to achieve a flexible use of the individual modular power stack units 1, the electrical interface 6 of each modular power stack unit 1 has the same structure. The individual terminals of the electrical interface 6 having the same functionality in each modular power stack unit 1 are located at the same position and have the same design. For example, the terminals for receiving and/or providing the three phases of an alternating current have a predetermined structure and are located at a predetermined position within the modular power stack unit 1. In the same way, the terminals for receiving and/or providing a direct current have a predetermined structure and are located at a predetermined position within the modular power stack unit 1, too.

In this way, a mounting device for receiving the modular power stack units 1 can be equipped with a standardized interface for receiving the terminals of the electrical interface of the modular power stack units 1.

For example, the interface comprises a plurality of terminals for a pluggable connection. A pluggable connection of the electrical interfaces enables a very fast connection of the modular power stack units 1. In this way, a modular power stack unit 1 can be easily placed into a mounting device, for instance a rack, and an electrical connection is automatically established.

By providing the same electrical interface 6 for all modular power stack units 1 a flexible arrangement of the modular power stack units 1 can be achieved. In this way, a standardized mounting device, for instance a rack, can be provided. This mounting device provides a plurality of electrical and mechanical interfaces for receiving the respective electrical and mechanical interfaces of each modular power stack unit 1. Thus, the individual modular power stack units 1 can be very easily inserted and removed. Accordingly, an easy assembling and an accelerated maintenance can be achieved.

Alternatively or additionally, the terminals of the electrical interface 6 may be connected by cables. In this way, a very flexible connection between the individual modular power stack units 1 and/or a connection to peripheral elements can be achieved.

Furthermore, such cables may further serve as a fuse. If a component of the power converter might be damaged and a high current is flowing through a cable, the cable may fuse and the electrical connection will be interrupted. In this way, a further damage of the power converter can be prevented.

Since each power module 2 is controlled by a separate driver unit, a damage of one power module does not influence the remaining power modules. Thus, the functionality of the wholes power stack unit 1 can be maintained, even if one power module 2 of the plurality of power modules 2 will be damaged. In contrast to this, damage in a single IGBT in a conventional power stack will lead to an overcurrent and to a damage of the whole power stack. Thus, the reliability of a power stack unit 1 according to the present invention can be increased with respect to a conventional power stack.

Figure 2 illustrates a schematically rear view of a power stack unit 1. According to the illustration of this embodiment, three terminals are arranged on the left side and three terminals are arranged on the right side. Other arrangements of connectors with another number of connection terminals are possible, too. In order to achieve a flexible combination of a plurality of modular power stack units 1, the structure of the electrical interface 6 with the terminals is unique for each modular power stack unit 1.

Figure 3 illustrates a schematically configuration of a three phase inverter which can be realized by a modular power stack unit 1 according to the present invention. As can be seen in Figure 3, the inverter comprises a capacitor 30 and three power modules 21, 22 and 23. Such a three phase inverter can be realized, for instance, by commonly available standard IGBT modules with a power range of 100 kVA, 125 kVA or 150 kVA. Power modules, in particular standardized power modules having another power range are also possible.

In order to increase the power range, one modular power stack unit 1 may comprise two of the three phase inverter arrangements. According to Fig. 1 a first three phase inverter can be arranged on the left, and a second three phase inverter can be arranged on the right, for example. When using, for instance, 125 kVA standard IGBT modules, a power range of 250 kVA can be achieved without a need for specialized 250 kVA power modules.

Other arrangements of modular power stack units 1 comprising a different number of power modules 2 and a different number of functional elements, such as inverters, are also possible.

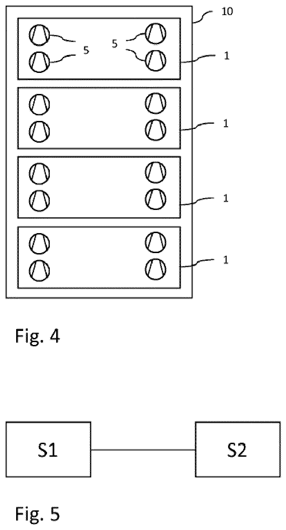

In order to further increase the power range of the power converter, two or more modular power stack units 1 can be combined. For instance, a power range of 1.000 kVA can be realized by combining four of the above described modular power stack units 1 each comprising two three phase inverters of 125 kVA, respectively. Such a combination of four modular power stack units 1 in a power converter is illustrated in Figure 4.

However, the present invention is not limited to the combination of four modular power stack units 1. It is also possible to combine less or more than four modular power stack units 1 in a power converter. In particular, it is also possible to change the power range of a power converter at a later time by increasing or decreasing the number of modular power stack units 1. Accordingly, a very flexible arrangement of a power converter is provided. Even an adaption of the overall power dimensions of such a power converter can be realized by adding or removing individual components.

By building-up a power converter having a plurality of individual modular power stack units 1, the reliability of the power converter is also increased. In case of a failure in one of the modular power stack units 1, the remaining modular power stack units 1 will remain functional. Thus, only the not working modular power stack unit 1 has to be replaced by another one.

In order to enable a flexible and easily arrangement of the plurality of modular power stack units 1, the modular power stack units 1 can be arranged in a mounting device 10, for instance a rack. This mounting device 10 may provide a plurality of mechanical interfaces for receiving the mechanical interfaces of the modular power stack units 1. By applying the same mechanical interfaces to all modular power stack units 1, a quick and easy assembly of the power converter can be realized. Further, the mounting device 10 may also provide terminals for connecting the terminals of the electrical interfaces 6 of the modular power stack units 1. In this way, an electrical connection is established when inserting a modular power stack unit 1 into the mounting device 10. Accordingly, the assembling of the power converter can be further accelerated, and the replacement of a damaged modular power stack unit 1 can be simplified.

In the following, the advantages of the configuration according to the present invention with respect to a conventional power stack will be explained. Conventional IGBT power stack constructions are known, for instance, as already discussed in the introductory portion. For example such a conventional power stack construction may be used in an inverter for photovoltaic applications. In one example, such a conventional inverter may comprise 8 IGBT half bridges per phase in parallel. Accordingly, 24 IGBT modules are used in total. When using, for instance, 24 IGBT modules of the type SKM 400GB 123 D (Semikron) a power range of 500 kW may be achieved.

According to an embodiment of the present invention, by using 24 power modules 2 of the same type (SKM 400GB 123 D), there can be made three phases with 8 power modules 2 in each phase. Thus, due to the excellent cooling conditions without thermal stacking and due to the lower switching losses a power range of 250 kW for each of the 8 power modules 2 comprising three phases can be achieved. Accordingly, a total power of 1500 kW (8 times 250 kW) can be achieved. Hence, by employing the same number of IGBT modules, the output power is three times higher than in a conventional power stack.

In this way, the power range can be extended and/or the size and the weight of a power stack 1 can be reduced. Since the costs of a power stack 1 correspond to weight and size of the power stack 1, the costs of a power stack can be reduced with respect to a conventional power stack having the same output range.

Although the above description relates to a modular inverter, the present invention is not limited to a power converter providing an inverter.

In another embodiment of the present invention, one or more modular power stack units 1 may provide rectifiers, DC/DC converters, AC/DC/AC converters or further functional groups. Accordingly, by combining such different modular power stack units 1, a very flexible arrangement of a power converter can be achieved.

By combining a plurality of standardized modular power stack units 1 having the same functionality, the power range of a power converter can be increased. Additionally, the power range of such a power converter can be increased or decreased by adding or removing one or more modular power stack units 1.

Further to this by combining a plurality of modular power stack units 1 having different functionality, for instance rectifier, inverter and/or DC-DC-converter, a very flexible power converter arrangement can be achieved.

For example, an uninterruptible power supply (UPS) can be realized by combining a rectifier, a DC/DC converter and an inverter. As long as an external power source is available, an altering current can be rectified by one or more rectifier modules in order to charge a battery. If necessary, the rectified voltage can be further adapted to the voltage of the battery by a DC/DC converter in an additional modular power stack unit.

Further, the UPS comprises one or more modular power stack units 1 providing the functionality of an inverter. When the external power supply is interrupted, the internal power supply can be maintained by these modular power stack units 1 providing inverter capabilities based on the energy of the charged battery.

Depending on the required power range of the UPS, one or more rectifier, inverter, DC/DC-converters can be used in parallel by combining a plurality of standardized modular power stack units 1.

Based on the modular concept of the present invention, the same modular power stack units 1 can be used for building inverters, UPS, etc. Thus, the present invention provides a very flexible concept for adapting a power converter to individual applications and power ranges.

As it has been illustrated in the above descried embodiments, the concept of modular power stack units 1 allows adapting a power converter to the individual requirements. Based on common components, a power converter for a very broad power range and many different applications can be realized. For instance, the same modular power stack units 1 can be used in an inverter for a photovoltaic generator, a wind generator or even in an UPS.

Figure 5 shows a diagram for an assembly method for assembling a power converter according to the present invention. In a first step S1 a plurality of modular power stack units 1 are provided. Each of the modular power stack units comprises a plurality of power modules 2, each power module 2 being connected to a separated driver unit, a capacitor 3, a connection means 4 for connecting the power module 2 and the capacitors 3, and an electrical interface 6. In a further step S2, the plurality of modular power stack units 1 are connected via the electrical interfaces 6.

In order to adapt the power range of the power converter, a number of modular power stack units 1 can be determined based on the desired power range of the power converter. By using a plurality of modular power stack units 1 in parallel, the power range of the power converter can be easily adapted.

Additionally, individual of modular power stack units 1 providing different functionality can be selected in order to build-up a desired power converter, for instance an inverter, a rectifier or an uninterruptible power supply, etc.

Summarizing, the present invention provides a concept for a power converter build-up by modular power stack design. The functionality and the power range of the power converter can be individually adapted by combining a plurality of modular power stack units 1. In order to adapt the power range of the power converter, a plurality of modular power stack units 1 can be combined in parallel.

## Claims

1. A power converter with a plurality of modular power stack units (1), each modular power stack unit (1) comprising:
a plurality of power modules (2), wherein one or more power modules (2) are arranged on a first side of the modular power stack unit (1) and one or more power modules (2) are arranged on a second side of the modular power stack unit (1), wherein the second side is opposite of the first side, each power module (2) being connected with a separate driver unit;
a capacitor (3);
a connection means (4) for connecting the power modules (2) and the capacitor (3), wherein the capacitor (3) is arranged between the one or more power modules (2) arranged on the first side and the one or more power modules (2) arranged on the second side;
an electrical interface (6), wherein each electrical interface (6) of the plurality of modular power stack units (1) has a same structure;
wherein the separate driver units of each power module (2) are adapted to provide an IGBT-driving signal to the connected power module (2), respectively, wherein each power module (2) comprises a power diode and/or an insulated gate bipolar transistor, IGBT.

2. The power converter according to claim 1, wherein each power module (2) is the same.

3. The power converter according to claim 1 or 2, wherein the modular power stack unit (1) further comprises a cooling means (5).

4. The power converter according to claim 3, wherein the cooling means (5) further comprises a forced air cooling system or a liquid cooling system.

5. The power converter according to any of claims 1 to 4, wherein each of the plurality of power stack units (1) comprises a mechanical interface, each mechanical interface of the plurality of modular power stack units (1) being the same.

6. The power converter according to any of claims 1 to 5, wherein the connection means (6) comprises a bus bar.

7. The power converter according to any of claims 1 to 6, wherein at least one of the plurality of modular power stack units (1) is a rectifier, an inverter, a DC/DC-converter or an AC-DC-AC-converter.

8. The power converter according to any of claims 1 to 7 further comprising a mounting device (10) for receiving the plurality of modular power stack units.

9. The power converter according to claim 8, wherein the mounting device (10) further comprises pluggable connectors for connecting the electrical interface (6) of the modular power stack units (1).

10. An uninterruptable power supply comprising a power converter according any of claims 1 to 9.

11. A solar inverter or wind energy inverter comprising a power converter according any of claims 1 to 9.

12. An assembly method for assembling a power converter comprising the steps of providing (S1) a plurality of modular power stack units (1), each modular power stack unit (1) comprising
a plurality of power modules (2) , wherein one or more power modules (2) are arranged on a first side of the modular power stack unit (1) and one or more power modules (2) are arranged on a second side of the modular power stack unit (1), wherein the second side is opposite of the first side, each power module (2) being connected to a separated driver unit, a capacitor (3), a connection means (4) for connecting the power modules (2) and the capacitor (3), wherein the capacitor (3) is arranged between the one or more power modules (2) arranged on the first side and the one or more power modules (2) arranged on the second side, and an electrical interface (6), wherein each electrical interface (6) of the plurality of modular power stack units (1) has a same structure, wherein the separate driver units of each power module (2) are adapted to provide an IGBT-driving signal to the connected power module (2), respectively, wherein each power module (2) comprises a power diode and/or an insulated gate bipolar transistor, IGBT; and
connecting (S2) the plurality of modular power stack units (1) via the electrical interfaces (6).

13. The assembly method according to claim 12, wherein a number of modular power stack units (1) is determined based on a desired power range of the power converter.

## Patentansprüche

1. Stromwandler mit mehreren modularen Leistungsteileinheiten (1), wobei jede modulare Leistungsteileinheit (1) umfasst:
mehrere Leistungsmodule (2); wobei ein oder mehrere Leistungsmodule (2) auf einer ersten Seite der modularen Leistungsteileinheit (1) angeordnet sind und ein oder mehrere Leistungsmodule (2) auf einer zweiten Seite der modularen Leistungsteileinheit (1) angeordnet sind, wobei die zweite Seite der ersten Seite gegenüberliegt, wobei jedes Leistungsmodul (2) mit einer separaten Treibereinheit verbunden ist;
einen Kondensator (3);
ein Verbindungsmittel (4) zum Verbinden der Leistungsmodule (2) und des Kondensators (3), wobei der Kondensator (3) zwischen den ein oder mehreren Leistungsmodulen (2), die auf der ersten Seite angeordnet sind, und den ein oder mehreren Leistungsmodulen (2), die auf der zweiten Seite angeordnet sind, angeordnet ist;
eine elektrische Schnittstelle (6), wobei jede elektrische Schnittstelle (6) der mehreren modularen Leistungsteileinheiten (1) die gleiche Struktur aufweist;
wobei die separaten Treibereinheiten jedes Leistungsmoduls (2) dafür ausgelegt sind, ein IGBT-Treibersignal an das jeweils angeschlossene Leistungsmodul (2) bereitzustellen, wobei jedes Leistungsmodul (2) eine Leistungsdiode und/oder einen Bipolartransistor mit isolierter Gate-Elektrode, IGBT (Insulated Gate Bipolar Transistor), umfasst.

2. Stromwandler gemäß Anspruch 1, wobei jedes Leistungsmodul (2) gleich ist.

3. Stromwandler gemäß Anspruch 1 oder 2, wobei die modulare Leistungsteileinheit (1) ferner ein Kühlmittel (5) umfasst.

4. Stromwandler gemäß Anspruch 3, wobei das Kühlmittel (5) ferner ein Zwangsluft-Kühlsystem oder ein Flüssigkeits-Kühlsystem umfasst.

5. Stromwandler gemäß einem der Ansprüche 1 bis 4, wobei jede der mehreren Leistungsteileinheiten (1) eine mechanische Schnittstelle aufweist, wobei jede mechanische Schnittstelle der mehreren modularen Leistungsteileinheiten (1) gleich ist.

6. Stromwandler gemäß einem der Ansprüche 1 bis 5, wobei das Verbindungsmittel (6) eine Stromschiene umfasst.

7. Stromwandler gemäß einem der Ansprüche 1 bis 6, wobei wenigstens eine der mehreren modularen Leistungsteileinheiten (1) ein Gleichrichter, ein Wechselrichter, ein DC/DC-Wandler oder ein AC-DC-AC-Wandler ist.

8. Stromwandler gemäß einem der Ansprüche 1 bis 7, ferner eine Montagevorrichtung (10) zur Aufnahme der mehreren modularen Leistungsteileinheiten umfassend.

9. Stromwandler gemäß Anspruch 8, wobei die Montagevorrichtung (10) ferner steckbare Verbinder zum Anschließen der elektrischen Schnittstelle (6) der modularen Leistungsteileinheit (1) umfasst.

10. Unterbrechungsfreie Stromversorgung, einen Stromwandler gemäß einem der Ansprüche 1 bis 9 umfassend.

11. Solarwechselrichter oder Windenergie-Wechselrichter, einen Stromwandler gemäß einem der Ansprüche 1 bis 9 umfassend.

12. Montageverfahren zum Montieren eines Stromwandlers, die Schritte umfassend:
Bereitstellen (S1) mehrerer modularer Leistungsteileinheiten (1), wobei jede modulare Leistungsteileinheit (1) umfasst:
mehrere Leistungsmodule (2), wobei ein oder mehrere Leistungsmodule (2) auf einer ersten Seite der modularen Leistungsteileinheit (1) angeordnet sind und ein oder mehrere Leistungsmodule (2) auf einer zweiten Seite der modularen Leistungsteileinheit (1) angeordnet sind, wobei die zweite Seite der ersten Seite gegenüberliegt, wobei jedes Leistungsmodul (2) mit einer separaten Treibereinheit verbunden ist, einen Kondensator (3), ein Verbindungsmittel (4) zum Verbinden der Leistungsmodule (2) und des Kondensators (3), wobei der Kondensator (3) zwischen den ein oder mehreren Leistungsmodulen (2), die auf der ersten Seite angeordnet sind, und den ein oder mehreren Leistungsmodulen (2), die auf der zweiten Seite angeordnet sind, angeordnet ist, und eine elektrische Schnittstelle (6), wobei jede elektrische Schnittstelle (6) der mehreren modularen Leistungsteileinheiten (1) die gleiche Struktur aufweist, wobei die separaten Treibereinheiten jedes Leistungsmoduls (2) dafür ausgelegt sind, ein IGBT-Treibersignal an das jeweils angeschlossene Leistungsmodul (2) bereitzustellen, wobei jedes Leistungsmodul (2) eine Leistungsdiode und/oder einen Bipolartransistor mit isolierter Gate-Elektrode, IGBT (Insulated Gate Bipolar Transistor), umfasst; und
Verbinden (S2) der mehreren modularen Leistungsteileinheiten (1) über die elektrischen Schnittstellen (6).

13. Montageverfahren gemäß Anspruch 12, wobei eine Anzahl von modularen Leistungsteileinheiten (1) basierend auf einem gewünschten Leistungsbereich des Stromwandlers bestimmt wird.

## Revendications

1. Convertisseur de puissance avec une pluralité d'unités d'empilement de puissance modulaires (1), chaque unité d'empilement de puissance modulaire (1) comprenant :
une pluralité de modules de puissance (2), un ou plusieurs modules de puissance (2) étant agencés sur un premier côté de l'unité d'empilement de puissance modulaire (1) et un ou plusieurs modules de puissance (2) étant agencés sur un deuxième côté de l'unité d'empilement de puissance modulaire (1), le deuxième côté étant opposé au premier côté, chaque module de puissance (2) étant connecté à une unité d'excitation séparée ;
un condensateur (3) ;
un moyen de connexion (4) pour connecter les modules de puissance (2) et le condensateur (3), le condensateur (3) étant agencé entre les un ou plusieurs modules de puissance (2) agencés sur le premier côté et les un ou plusieurs modules de puissance (2) agencés sur le deuxième côté ;
une interface électrique (6), chaque interface électrique (6) de la pluralité d'unités d'empilement de puissance modulaires (1) ayant une même structure ;
les unités d'excitation séparées de chaque module de puissance (2) étant conçues pour fournir un signal d'excitation d'IGBT au module de puissance connecté (2), respectivement, chaque module de puissance (2) comprenant une diode de puissance et/ou un transistor bipolaire à porte isolée, IGBT.

2. Convertisseur de puissance selon la revendication 1, dans lequel chaque module de puissance (2) est le même.

3. Convertisseur de puissance selon la revendication 1 ou la revendication 2, dans lequel l'unité d'empilement de puissance modulaire (1) comprend en outre un moyen de refroidissement (5).

4. Convertisseur de puissance selon la revendication 3, dans lequel le moyen de refroidissement (5) comprend en outre un système de refroidissement à air forcé ou un système de refroidissement par liquide.

5. Convertisseur de puissance selon l'une quelconque des revendications 1 à 4, dans lequel chaque unité de la pluralité d'unités d'empilement de puissance (1) comprend une interface mécanique, chaque interface mécanique de la pluralité d'unités d'empilement de puissance modulaires (1) étant la même.

6. Convertisseur de puissance selon l'une quelconque des revendications 1 à 5, dans lequel le moyen de connexion (6) comprend une barre omnibus.

7. Convertisseur de puissance selon l'une quelconque des revendications 1 à 6, dans lequel au moins une unité de la pluralité d'unités d'empilement de puissance modulaires (1) est un redresseur, un onduleur, un convertisseur CC/CC ou un convertisseur CA-CC-CA.

8. Convertisseur de puissance selon l'une quelconque des revendications 1 à 7 comprenant en outre un dispositif de montage (10) pour recevoir la pluralité d'unités d'empilement de puissance modulaires.

9. Convertisseur de puissance selon la revendication 8, dans lequel le dispositif de montage (10) comprend en outre des connecteurs enfichables pour connecter l'interface électrique (6) des unités d'empilement de puissance modulaires (1).

10. Alimentation en puissance sans coupure comprenant un convertisseur de puissance selon l'une quelconque des revendications 1 à 9.

11. Onduleur solaire ou onduleur d'énergie éolienne comprenant un convertisseur de puissance selon l'une quelconque des revendications 1 à 9.

12. Procédé d'assemblage pour assembler un convertisseur de puissance comprenant les étapes consistant à fournir (S1) une pluralité d'unités d'empilement de puissance modulaires (1), chaque unité d'empilement de puissance modulaire (1) comprenant
une pluralité de modules de puissance (2), un ou plusieurs modules de puissance (2) étant agencés sur un premier côté de l'unité d'empilement de puissance modulaire (1) et un ou plusieurs modules de puissance (2) étant agencés sur un deuxième côté de l'unité d'empilement de puissance modulaire (1), le deuxième côté étant opposé au premier côté, chaque module de puissance (2) étant connecté à une unité d'excitation séparée, un condensateur (3), un moyen de connexion (4) pour connecter les modules de puissance (2) et le condensateur (3), le condensateur (3) étant agencé entre les un ou plusieurs modules de puissance (2) agencés sur le premier côté et les un ou plusieurs modules de puissance (2) agencés sur le deuxième côté, et une interface électrique (6), chaque interface électrique (6) de la pluralité d'unités d'empilement de puissance modulaires (1) ayant une même structure, les unités d'excitation séparées de chaque module de puissance (2) étant conçues pour fournir un signal d'excitation d'IGBT au module de puissance connecté (2), respectivement, chaque module de puissance (2) comprenant une diode de puissance et/ou un transistor bipolaire à porte isolée, IGBT ; et
à connecter (S2) la pluralité d'unités d'empilement de puissance modulaires (1) par l'intermédiaire des interfaces électriques (6).

13. Procédé d'assemblage selon la revendication 12, dans lequel un certain nombre d'unités d'empilement de puissance modulaires (1) est déterminé sur la base d'une plage de puissance souhaitée du convertisseur de puissance.
